# EUROPEAN PATENT SPECIFICATION

(11) **EP 3 709 580 B1**
(45) Date of publication and mention of the grant of the patent: **07.10.2026**
(21) Application number: 19756464.4
(22) Date of filing: 20.02.2019
(51) Int. Cl.: H04L 12/66, H04W 12/10, H04W 92/24, H04L 9/40, H04L 9/08

(54) **WIRELESS COMMUNICATION SYSTEM, SECURITY PROXY DEVICE AND RELAY DEVICE**
DRAHTLOSES KOMMUNIKATIONSSYSTEM, SICHERHEITS-PROXYVORRICHTUNG UND RELAISVORRICHTUNG
SYSTÈME DE COMMUNICATION SANS FIL, DISPOSITIF MANDATAIRE DE SÉCURITÉ ET DISPOSITIF DE RELAIS

(30) Priority: 21.02.2018 JP 2018029222
(43) Date of publication of application: 16.09.2020
(73) Proprietor: NTT DOCOMO, INC., Chiyoda-ku Tokyo 100-6150 (JP)
(72) Inventor: AONO, Hiroshi, Tokyo 100-6150 (JP); ISHIKAWA, Hiroshi, Tokyo 100-6150 (JP); ZUGENMAIER, Alf, 80335 Munich (DE)
(74) Representative: Hoffmann Eitle
(86) International application number: PCT/JP2019/006254
(87) International publication number: WO 2019/163810

(56) References cited:
- JP-A- 2002 024 147
- JP-A- 2008 219 585
- JP-A- 2011 509 539
- JP-A- H1 091 427
- US-A1- 2005 172 131
- US-A1- 2009 119 407
- NOKIA: "Introduction to Application layer security in SEPP", vol. SA WG3, no. San Diego (US); 20180226 - 20180302, 19 February 2018 (2018-02-19), XP051409101, Retrieved from the Internet <URL:http://www.3gpp.org/ftp/tsg%5Fsa/WG3%5FSecurity/TSGS3%5F90Bis%5FSanDiego/Docs/> [retrieved on 20180219]

## Description

### TECHNICAL FIELD

The present invention relates to a radio communication system, a security proxy device, and a relay device. More particularly, the present invention relates to security and integrity of messages exchanged between a visited network and a home network.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced). In the 3GPP, specifications for 5G system, which is the successor of the LTE, are also being considered.

In the 5G system, N32 is defined as a reference point at the node between a home network (Home Public Land Mobile Network (HPLMN)) of the user equipment (UE) and a visited network of the UE (Visited PLMN (VPLMN)) (See Non-Patent Document 1).

Specifically, the N32 is defined as a reference point between a security proxy device on the VPLMN side, specifically, Security Edge Protection Proxy (vSEPP), and SEPP (hSEPP) on the HPLMN side.

### PRIOR ART DOCUMENT

### NON-PATENT DOCUMENT

Non-patent Document 1: 3GPP TS 23.501 V15.0.0 Subclause 4.2.4 Roaming reference architectures, 3rd Generation Partnership Project; Technical Specification Group Services and System Aspects; System Architecture for the 5G System; Stage 2 (Release 15), 3GPP, December 2017
NOKIA: "Introduction to Application layer security in SEPP", 3GPP DRAFT; S3-180676 APPLICATION LAYER SECURITY BY SEPP, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG3, no. San Diego (US); 20180226 - 20180302 19 February 2018, provides an introductory text for the section on Application layer security. It describes that in the outgoing direction (i.e. from the Network function), the SEPP needs to identify the IEs in the received message and determine the protection mechanism it must apply for each of them. In the incoming direction (i.e. towards the Network function), the SEPP needs to determine from the received protected message how to retrieve the original message and which Network function to forward. Prior to implementing ALS, the two SEPPs must agree on the cipher suite to use for N32 protection. In addition, the keys used for protection must be negotiated between two SEPPs. The protection scheme used must enable authorized IPX provider nodes to modify the IEs, and the received SEPP to identify unauthorized modification by IPX provider nodes or any other entity on the N32 interface.
US 2009/119407 A1 relates to a method, a proxy and a host for securing neighbor discovery (ND) signaling between hosts when the hosts are connected through the proxy. A first host sends an original ND message comprising a first signature based on an address of the first host. The proxy removes the address of the first host and substitutes its own address in a modified ND message. The proxy then places a copy of the address of the first host in a new field and builds a proxy signature based on the own address of the proxy and on the new field. The new field and the proxy signature are added to the modified ND message. A second host receives the modified ND message from the proxy and verifies the proxy signature. The second host reconstructs the original ND message content and then verifies the first signature.

### SUMMARY OF THE INVENTION

In practice, IP exchange (IPX) provider (IPX provider) is present between the vSEPP and the hSEPP (N32), and in some cases, depending on operational conditions and the like, the IPX provider needs to delete, modify, or add an element of a message (typically, HTTP Request, HTTP Response, etc.) relayed between the VPLMN and the HPLMN.

On the other hand, if a message relayed between the VPLMN and the HPLMN is encrypted in order to guarantee the integrity of a message, deletion, modification, or addition of an element mentioned above cannot be performed.

The present invention has been made in view of the above discussion. One object of the present invention is to provide a radio communication system, a security proxy device, and a relay device that allows addition of an information element in a message, and/or deletion and/or modification of an information element included in a message while guaranteeing the integrity of a message relayed between the VPLMN and the HPLMN.

The invention is defined by independent claim 1.

A radio communication system according to one aspect of the present invention is a radio communication system (radio communication system 10) that includes a security proxy device (vSEPP 210) connectable to a mobile communication network (VPLMN 20); and a relay device (relay device 310) connectable to the security proxy device. The security proxy device includes an encapsulation unit (encapsulation unit 211) that encapsulates a predetermined element included in an original message (HTTP Request) received via the mobile communication network; a first signature unit (signature unit 213) that adds a first signature to a first message that is obtained by encapsulation of the predetermined element by the encapsulation unit; and a message transmitting unit (message transmitting unit 215) that transmits the first message to the relay device. The relay device includes a message receiving unit (message receiving unit 311) that receives the first message; a modifying unit (modifying unit 313) that decapsulates the predetermined element included in the first message and executes a modification to the predetermined element; a second signature unit (signature unit 315) that adds a second signature to a second message including the predetermined element modified by the modifying unit; and a message relaying unit (message relaying unit 317) that relays the second message to another mobile communication network (HPLMN 30).

A security proxy device according to another aspect of the present invention is a security proxy device connectable to a mobile communication network. The security proxy device includes an encapsulation unit that encapsulates a predetermined element included in an original message received via the mobile communication network; a first signature unit that adds a first signature to a first message that is obtained by encapsulation of the predetermined element by the encapsulation unit; and a message transmitting unit that transmits the first message to a relay device that is connectable to the security proxy device.

A relay device according to still another aspect of the present invention is a relay device connectable to a security proxy device that is connectable to a mobile communication network. The relay device includes a message receiving unit that receives a first message of which a predetermined element included in an original message received by the security proxy device via the mobile communication network has been encapsulated; a modifying unit that decapsulates the predetermined element included in the first message and executes a modification to the predetermined element; a second signature unit that adds a second signature to a second message including the predetermined element modified by the modifying unit; and a message relaying unit that relays the second message to another mobile communication network.

### BREIF DESCRIPTION OF DRAWINGS

FIG. 1 is an overall schematic configuration diagram of a radio communication system 10.
FIG. 2 is a diagram illustrating a configuration example of a network between vSEPP 210 and hSEPP 220.
FIG. 3 is a functional block diagram of the vSEPP 210.
FIG. 4 is a functional block diagram of a relay device 310.
FIG. 5 is a diagram showing a relay sequence of a message relayed between VPLMN 20 and HPLMN 30.
FIG. 6A is a diagram showing a modification example of HTTP Request by the vSEPP 210.
FIG. 6B is a diagram showing another modification example of the HTTP Request by the vSEPP 210.
FIG. 7 is a diagram showing a signature example added in the HTTP Request by the vSEPP 210.
FIG. 8 is a diagram illustrating a modification example of the HTTP Request by the relay device 310.
FIG. 9 is a diagram showing addition of a modification history in the HTTP Request by the relay device 310 and a signature example of the HTTP Request.
FIG. 10 is a diagram showing a description example of an array of "requesthistory" (modification history) in the relay device 310.
FIG. 11 is a diagram showing a signature example of the HTTP Request in the relay device 320.
FIG. 12 is a diagram illustrating an exemplary hardware configuration of the vSEPP 210 and the relay device 310.

### MODES FOR CARRYING OUT THE INVENTION

Exemplary embodiments will be described below with reference to the drawings. The same functions and configurations are denoted with the same or similar reference numerals, and description thereof is omitted as appropriate.

### (1) Overall Schematic Configuration of Radio Communication System

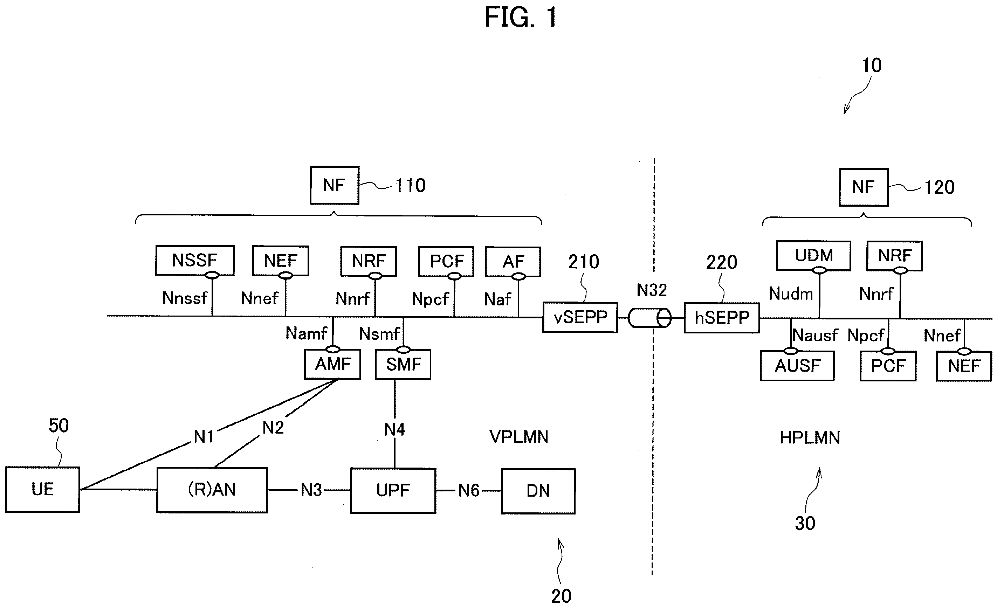

FIG. 1 is an overall schematic configuration diagram of a radio communication system 10 according to the present embodiment. The radio communication system 10 is a radio communication system according to 5G New Radio (NR). The radio communication system 10 includes Visited Public Land Mobile Network 20 (hereinafter, "VPLMN 20"), Home Public Land Mobile Network 30 (hereinafter, "HPLMN 30"), and the like.

A user equipment 50 (hereinafter, "UE 50") can access the VPLMN 20 and the HPLMN 30, and perform radio communication with a radio access network ((R)AN) included in the VPLMN 20 and a radio access network (not shown) included in the HPLMN 30, specifically, with gNB (radio base station).

The VPLMN 20 is constituted by a plurality of functional entities. Specifically, the VPLMN 20 includes NSSF (Network Slice Selection Function), NEF (Network Exposure Function), NRF (Network Repository Function), PCF (Policy Control Function), and AF (Application Function).

The VPLMN 20 includes AMF (Access and Mobility Management Function) and SMF (Session Management Function). Network Function 110 (hereinafter, "NF 110") is provided by these functional entities. Furthermore, the VPLMN 20 includes UPF (User Plane Function) and DN (Data Network).

The HPLMN 30 has almost the same configuration as the VPLMN 20. The HPLMN 30 includes AUSF (Authentication Server Function) and UDM (Unified Data Management). Network Function 120 (hereinafter, "NF 120") is provided by these functional entities.

A reference point beginning with English character "N" (N3, Nnssf, and the like) is defined in each functional entity that provides the NF 110 and the NF 120.

The VPLMN 20 includes visited Security Edge Protection Proxy 210 (hereinafter, "vSEPP 210"). The HPLMN 30 includes home Security Edge Protection Proxy 220 (hereinafter, "hSEPP 220").

The vSEPP 210 is connected to the VPLMN 20 (mobile communication network). The hSEPP 220 is connected to the HPLMN 30 (another mobile communication network). In the present embodiment, the vSEPP 210 and the hSEPP 220 constitute the security proxy device.

Between the vSEPP 210 and the hSEPP 220 is defined as N32 which is a reference point at the node between the VPLMN 20 and the HPLMN 30.

The vSEPP 210 and the hSEPP 220 provide functions related to security and integrity of a message (such as HTTP Request and HTTP Response) transmitted and received between the VPLMN 20 and the HPLMN 30.

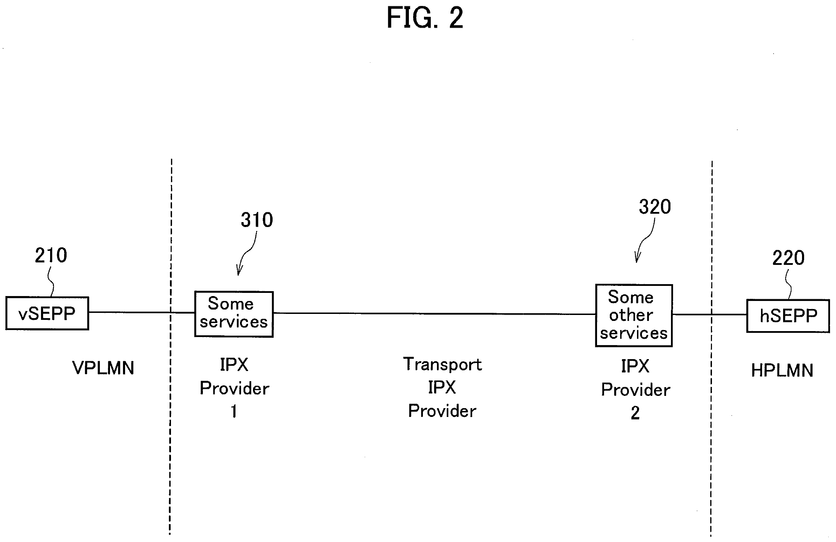

FIG. 2 shows a configuration example of a network between the vSEPP 210 and the hSEPP 220. As shown in FIG. 2, IPX provider is present between the vSEPP 210 and the hSEPP 220.

Specifically, IPX provider 1 is arranged on the vSEPP 210 side and IPX provider 2 is arranged on the hSEPP 220 side.

The IPX provider 1 includes a relay device 310 that relays messages transmitted and received between the vSEPP 210 and the hSEPP 220. Similarly, the IPX provider 2 includes a relay device 320 that relays messages.

The relay device 310 is connected to the vSEPP 210. The relay device 320 is connected to the hSEPP 220. The relay device 310 and the relay device 320 provide predetermined services. Particularly, in the present embodiment, the relay device 310 and the relay device 320 can execute, depending on operational conditions and the like of the IPX provider, a modification (including deletion and addition) of a predetermined element (Content-Length and the like included in HTTP-headers) that is a part of information element included in the relayed message.

### (2) Functional Block Configuration of Radio Communication System

A functional block configuration of the radio communication system 10 will be described below. Specifically, functional block configurations of the vSEPP 210 and the relay device 310 will be described.

### (2.1) vSEPP 210

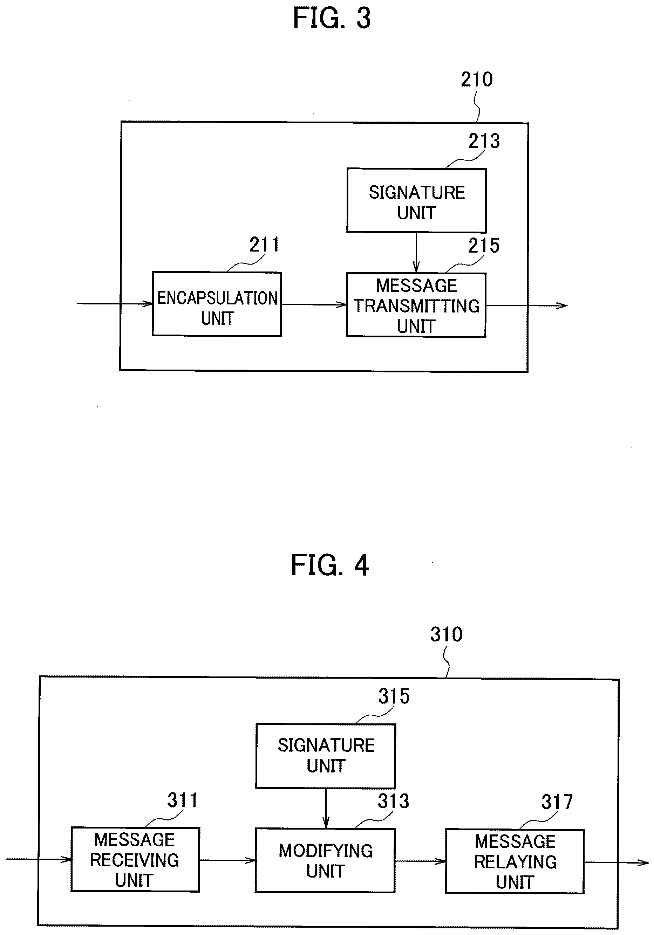

FIG. 3 is a functional block diagram of the vSEPP 210. As shown in FIG. 3, the vSEPP 210 includes an encapsulation unit 211, a signature unit 213, and a message transmitting unit 215. The hSEPP 220 has the same configuration as the vSEPP 210.

The encapsulation unit 211 encapsulates a predetermined element included in an original message that is received from the VPLMN 20. Specifically, the encapsulation unit 211 encapsulates, by using a key acquired with a predetermined key exchange mechanism, a body and a header of Request (SBI Request) on SBI (Service Based Interface) that acts as an interface with SBA (Service Base Architecture) contained in the original message.

More specifically, the encapsulation unit 211 encapsulates an element defined by a predetermined data format according to JavaScript (Registered Trademark) Object Notation (JSON). Note that specific examples of the target elements to be encapsulated will be described later.

The signature unit 213 adds a signature (first signature) to a message (first message) containing the SBI Request in which a predetermined element has been encapsulated by the encapsulation unit 211. In the present embodiment, the signature unit 213 constitutes a first signature unit. The signature unit 213 has a function not only to add the signature but also to verify the added signature.

Specifically, the signature unit 213 adds a signature of the VPLMN 20 (Mobile Network Operator (MNO)) to an element included in a header and a payload to be protected and included in the SBI Request output from the encapsulation unit 211. A specific example of the signature of the vSEPP 210 will be described later.

The message transmitting unit 215 transmits to the relay device 310 the message (first message) that is obtained by making a modification in the original message received from the VPLMN 20. Specifically, the message transmitting unit 215 transmits to the relay device 310 the message (first message) in which the signature has been added by the signature unit 213.

### (2.2) Relay Device 310

FIG. 4 is a functional block diagram of the relay device 310. As shown in FIG. 4, the relay device 310 includes a message receiving unit 311, a modifying unit 313, a signature unit 315, and a message relaying unit 317. The relay device 320 has the same configuration as the relay device 310.

The message receiving unit 311 receives a message from the vSEPP 210. Specifically, the message receiving unit 311 receives a message (first message) of which a predetermined element of the SBI Request has been encapsulated and in which MNO signature has been added.

The modifying unit 313 decapsulates the predetermined element included in the message received by the message receiving unit 311. Specifically, the modifying unit 313 decapsulates the predetermined element by using a key acquired with a predetermined key exchange mechanism.

Also, the modifying unit 313 executes a modification to the decapsulated predetermined element (such as a body and a header of the SBI Request). As explained above, the modification to a given element includes deletion and/or addition of an element.

Specifically, the modifying unit 313 executes a modification to the predetermined element based on a predetermined data format according to the JSON.

More specifically, the modifying unit 313 executes a modification to the contents of the SBI Request by using JSON-Patch mechanism. Such a modification is called JSON-Patch (RFC6902). A specific example of the modification to the predetermined element will be described later.

The signature unit 315 adds a signature (second signature) to the message (second message) that includes the predetermined element modified by the modifying unit 313. In the present embodiment, the signature unit 315 constitutes a second signature unit. The signature unit 315 has a function of not only adding the signature but also verifying the added signature.

Specifically, the signature unit 315 adds the signature of the IPX provider 1 to a modification history of the predetermined element modified by the modifying unit 313. The modification history includes the contents of the encapsulation performed in the vSEPP 210 and the signature (first signature) added by the MNO of the VPLMN 20.

More specifically, the signature unit 315 adds, among the array of elements, the signature in the JSON-Patch to guarantee the integrity of the JSON-Patch that includes the element to be modified (Linked list elements ("next", "previous")).

The Linked list elements can indicate the correct application order of multiple JSON-Patches thereby preventing unauthorized modification of the contents. A specific example of the signature by the relay device 310 will be further described later.

The message relaying unit 317 relays the message (second message) that includes the predetermined element modified by the modifying unit 313 to the HPLMN 30 (another mobile communication network). Specifically, the message relaying unit 317 relays the message (second message) with the signature added by the signature unit 315 to the HPLMN 30.

That is, the message relayed by the message relaying unit 317 includes the MNO signature (first signature) of the VPLMN 20, the signature of the IPX provider 1 (second signature), and the modification history of the predetermined element by the modifying unit 313.

### (3) Radio Communication System Operation

The operation of the radio communication system 10 will be described below. Specifically, a message relay sequence between the VPLMN 20 and the HPLMN 30, an example of message modification in the vSEPP 210 and the relay device 310, and an example of the signature added in the message by the vSEPP 210 and the relay device 310 will be described below.

### (3.1) Message Relay Sequence

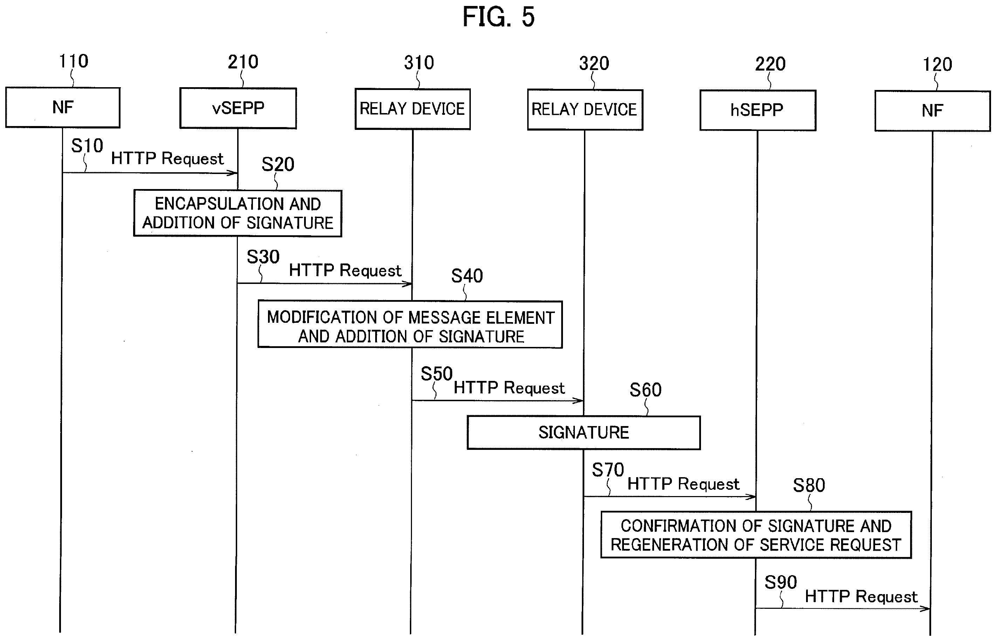

FIG. 5 shows a message relay sequence between the VPLMN 20 and the HPLMN 30. Here, an example in which the message is the SBI Request, specifically, the HTTP Request will be described.

As shown in FIG. 5, the NF 110 included in the VPLMN 20 transmits the HTTP Request to the vSEPP 210 in response to a request from the UE 50 (Step S10).

The vSEPP 210 encapsulates the predetermined element included in the received HTTP Request, and adds the MNO signature of the VPLMN 20 to the encapsulated predetermined element (Step S20). The vSEPP 210 transmits the HTTP Request, which includes the predetermined encapsulated element and in which the signature has been added, to the relay device 310 operated by the IPX provider 1 (Step S30).

The relay device 310 modifies the predetermined element of the HTTP Request (message) received from the vSEPP 210, and adds the signature of the IPX provider 1 to the modification history of the predetermined element (Step S40).

The relay device 310 decapsulates, as explained above, the encapsulated predetermined element, and executes the modification. The reason for executing the modification includes the need to modify the operational conditions (such as upper limit values of various elements) in the IPX provider **1.** As a more specific example, even if Homogenous Support of IMS Voice over PS Sessions (which is always possible while VoLTE is residing in the LTE node's area) is "supported", but if there is no roaming agreement between the two parties, the HPLMN, regardless of such a flag, must disable VoLTE when determining incoming calls. However, in the incoming call determination, when the flag is "supported", the specification is that the VoLTE call is received, so that the flag needs to be corrected.

The relay device 310 transmits the HTTP Request, which includes the predetermined element in which the modification has been executed and in which the signature has been added, to the relay device 320 operated by the IPX provider 2 (Step S50).

The relay device 320 adds the signature of the IPX provider 2 to the HTTP Request received from the relay device 310 (specifically, the modification history of the predetermined element included in the HTTP Request) (Step S60).

The relay device 320 transmits the HTTP Request, in which the signature of the IPX provider 2 has been further added, to the hSEPP 220 (Step S70).

The hSEPP 220 confirms all the signatures included in the HTTP Request received from the relay device 320 and regenerates a service request (SBI Request) based on the modification history included in the HTTP Request (Step S80).

The hSEPP 220 transmits the regenerated SBI Request, specifically, the HTTP Request, to the NF 120 (Step S90).

### (3.2) Modification Example of Message and Signature Example of Message

An example of modification of a message (HTTP Request) and an example of signature added in the message by the vSEPP 210, the relay device 310 (IPX provider 1), and the relay device 320 (IPX provider 2) will be described below.

### (3.2.1) vSEPP 210

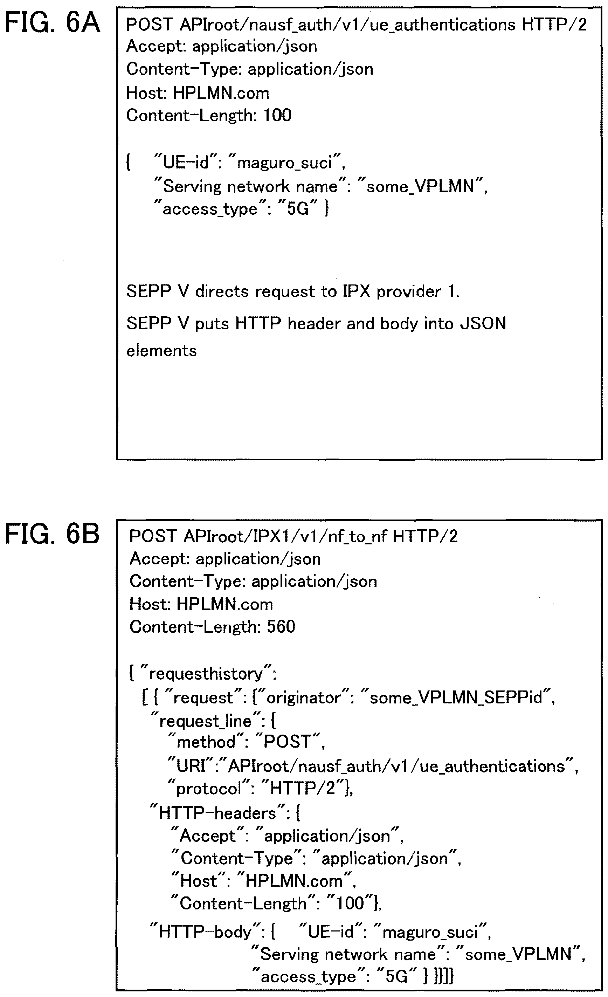

FIGS. 6A and 6B show a modification example of the HTTP Request by the vSEPP 210. Specifically, FIG. 6A shows the HTTP Request before a predetermined element is modified, and FIG. 6B shows the HTTP Request after the predetermined element is modified.

As shown in FIGS. 6A and 6B, the vSEPP 210 adds information (see the "requesthistory" part in FIG. 6B) that represents the predetermined element encapsulated in accordance with the JSON.

Specifically, the vSEPP 210 encapsulates a body, a header, URI, or the like of the HTTP Request according to the JSON. The method of adding the element (verb) is POST. The URI can be common to all the HTTP Requests.

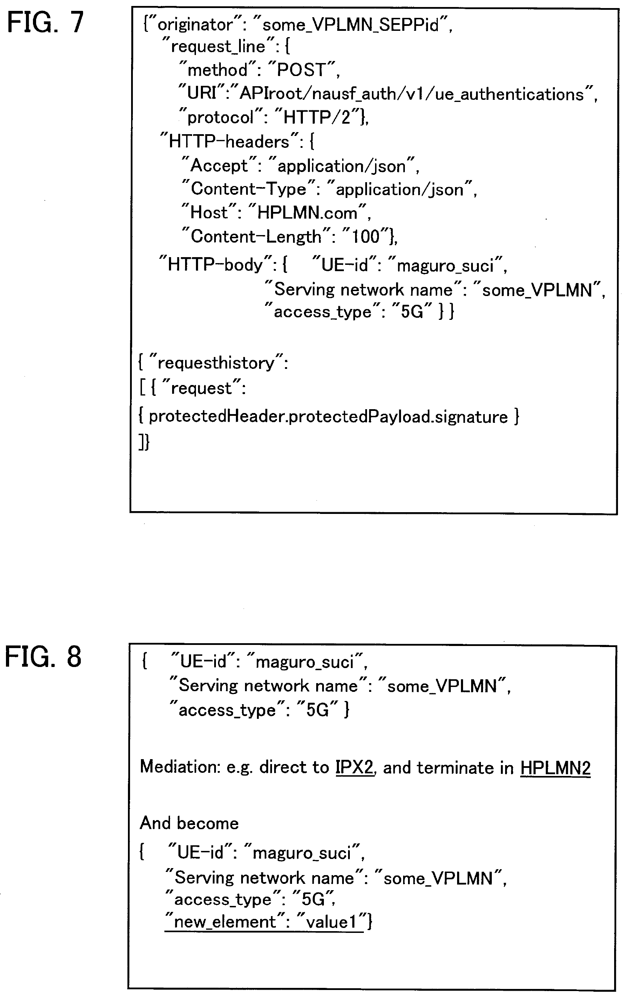

FIG. 7 shows a signature example added in the HTTP Request by the vSEPP 210. As shown in FIG. 7, the vSEPP 210 adds the MNO signature of the VPLMN 20 to the element included in a header and a payload that is the target of protection and included in the HTTP Request (see {protectedHeader.protectedPayload.signature} part in FIG. 7).

The header that is the target of protection (protectedHeader) includes an algorithm related to the description of the HTTP Request and ID of a key. Furthermore, the payload (body) that is the target of protection includes an object according to the JSON.

The vSEPP 210 guarantees the integrity of the HTTP Request based on JSON Web Signature (RFC7515). Elliptic Curve Digital Signature Algorithm (ECDSA) or Hash-based Message Authentication Code (HMAC) can be used as the signature.

### (3.2.2) Relay Device 310

FIG. 8 shows a modification example of the HTTP Request by the relay device 310. In the example shown in FIG. 8, the IPX provider 1 terminates the HTTP Request and executes a modification to transfer TCP connection to a new host (in this example IPX provider 2 (IPX2)) (see underlined part of FIG. 8).

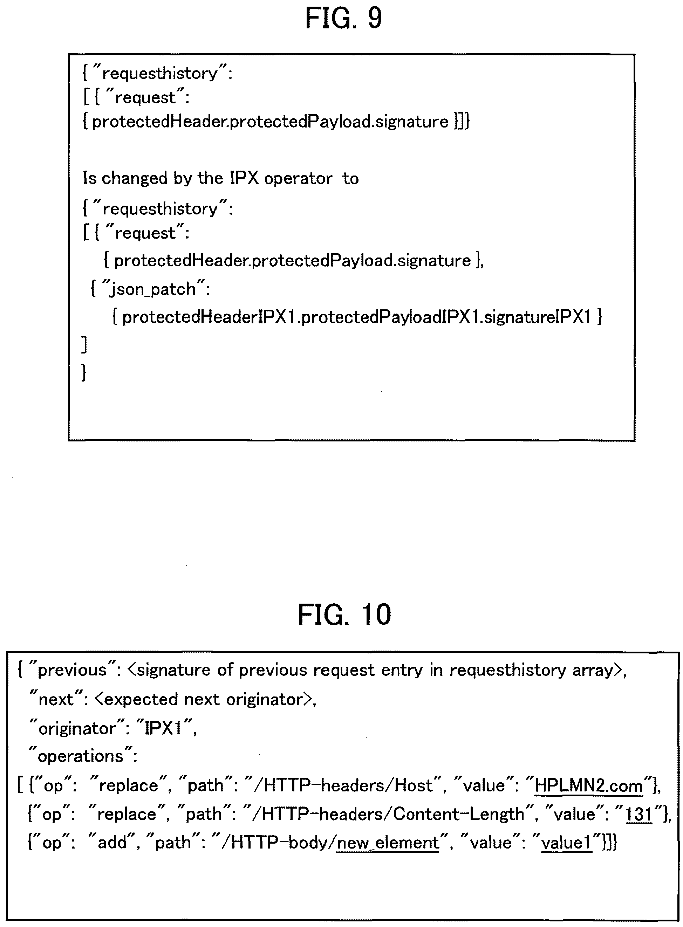

FIG. 9 shows an example of adding a modification history to the HTTP Request by the relay device 310, and an example of the signature added in the HTTP Request. As shown in FIG. 9, the relay device 310 adds modified contents of the HTTP Request shown in FIG. 8 to an array of "requesthistory" (modification history). As explained above, in the present embodiment, such modification contents are added based on the JSON-Patch (RFC6902).

Also, the relay device 310 adds the signature of the IPX provider 1 to the element contained in the header and the payload that is the target of protection and included in the HTTP Request (see {pprotectedHeaderIPX1.protectedPayloadIPX1.signatureIPX1} part in FIG. 9).

FIG. 10 shows a description example of the array of "requesthistory" (modification history) in the relay device 310. As shown in FIG. 10, "previous" indicates a modifying entity (here, the vSEPP 210, that is, the MNO of the VPLMN 20) that modified the HTTP Request at a timing before the relay device 310 (IPX provider 1) performs the modification.

"next" indicates a modifying entity that modified the HTTP Request at the next timing. If the modifying entity is unknown, this field can be left blank. In addition, if there is no need to modify the HTTP Request by the modifying entity, the JSON-Patch part can be omitted. By describing as shown in FIG. 10, the Linked list elements indicating the timing of the modification history to the HTTP Request are configured.

Moreover, the underlined part in FIG. 10 shows an example of the specific parts that are modified. "Content-Length" can change depending on the number of new elements (new_element).

### (3.2.3) Relay Device 320

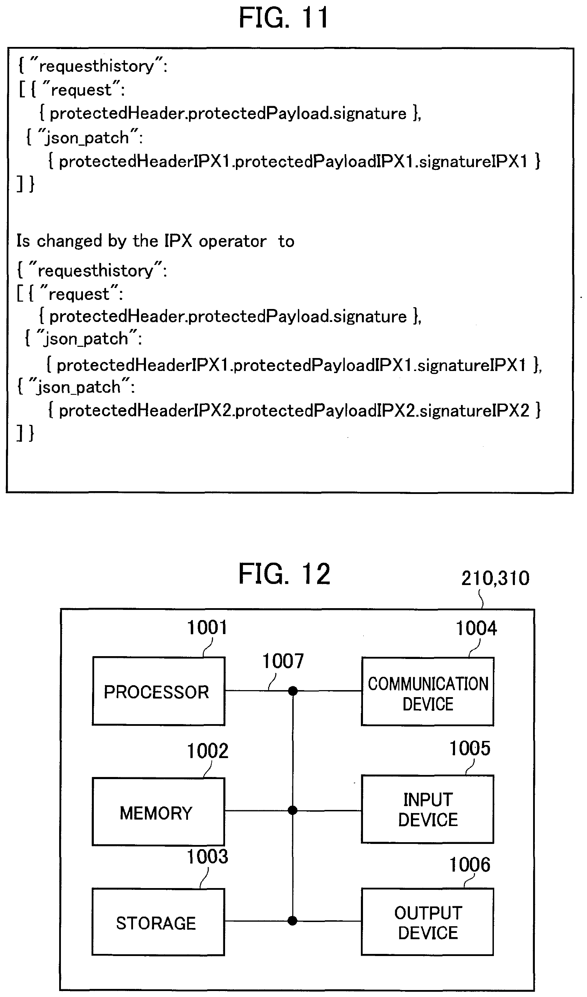

FIG. 11 shows a signature example of the HTTP request in the relay device 320. Here, the relay device 320 adds the signature of the IPX provider 2 to the HTTP Request without modifying the HTTP Request received from the relay device 310.

As shown in FIG. 11, the MNO signature of the VPLMN 20 is added in the elements contained in the header and the payload to be protected included in the HTTP Request (see the {protectedHeaderIPX2.protectedPayloadIPX2.signatureIPX2} part in FIG. 11). The signature method is the same as that of the vSEPP 210 and the relay device 310.

### (4) Advantageous Effects

According to the above-described embodiments, the following advantageous effects can be obtained. Specifically, the vSEPP 210 adds the signature (first signature) to the message (first message) that includes the SBI Request (HTTP Request) in which the predetermined element has been encapsulated.

The relay device 310 receives the message from the vSEPP 210 and executes the modification to the decapsulated predetermined element (such as the body, the header, or the like of the SBI Request). Furthermore, the relay device 310 adds the signature (second signature) to the message (second message) that includes the modified predetermined element.

Therefore, the relay device 310 (IPX provider 1) can modify the contents of the message according to the operational conditions and the like. Furthermore, since the signature of each entity (MNO of the VPLMN 20, the IPX provider 1, and the IPX provider 2) is added to the message, the integrity of the message can be guaranteed.

That is, in the radio communication system 10 including the vSEPP 210 and the relay device 310, it is possible to delete, modify, or add the message while guaranteeing the integrity of the message relayed between the VPLMN 20 and the HPLMN 30.

In the present embodiment, the relay device 310 (modifying unit 313) executes the modification to the predetermined element based on the predetermined data format (JSON-Patch) according to the JSON. For this reason, the modification of the predetermined element can be implemented easily and reliably by using the existing format.

In the present embodiment, the relay device 310 (signature unit 315) can add the signature (second signature) to the modification history ("requesthistory") of the predetermined element. For this reason, the integrity can be guaranteed even for a time series of modifications to the predetermined element.

Furthermore, the relay device 310 (message relaying unit 317) can relay the message (second message) including the signature (first signature) of the MNO of the VPLMN 20, the signature (second signature) of the IPX provider 1, and the above-described modification history to the HPLMN 30. Therefore, the HPLMN 30 can transmit the message to a predetermined destination in the HPLMN 30 after confirming that the integrity of the received message, including even the time series of the modification, is guaranteed.

In order to obtain the same effect as the radio communication system 10 described above, a method of transmitting and receiving HTTP Request and HTTP Response between adjacent functional entities can be considered. However, the method is not preferable from the viewpoint of response since there is an increase in the number of sequences in the radio communication system 10.

### (5) Other Embodiments

The present invention has been explained in detail by using the above mentioned embodiments; however, it is self-evident to a person skilled in the art that the present invention is not limited to the embodiments explained herein and that the embodiments can be modified or improved in various ways.

For example, in the above-described embodiments, the JSON-Patch (RFC6902) is used to execute the modification to the predetermined element included in the message; however, other methods, such as using JSON-Merge-Patch (RFC7396), can be employed. Alternatively, diff, binary diff, or http-patch can be used. In other words, any procedure set/data description language may be used as long as it can be applied to modification or transfer of data, messages, and syntactic information.

In the embodiments described above, the SBI Request (HTTP Request) has been described as an example, however, the same method can be applied to SBA Response (HTTP Response).

In the above-described embodiments, the operation of the vSEPP 210 and the relay device 310 has been described as an example, and the hSEPP 220 and the relay device 320 can operate in the same manner.

Furthermore, in the above-described embodiments, an example in which a device (relay device 310 and relay device 320) of the IPX provider is present between the vSEPP 210 and the hSEPP 220 has been described; however, it is allowable that a device other than the device of the IPX provider is present.

In addition, the block configuration diagrams (FIGS. 3 and 4) used in the description of the above-described embodiments show functional blocks. These functional blocks are realized by any combination of hardware and/or software. Furthermore, the means for realizing each functional block is not particularly limited. That is, each functional block may be realized by one physically and/or logically coupled device, or two or more physically and/or logically separated devices may be connected directly and/or indirectly (for example, wired and/or wireless) and each functional block may be realized by these plurality of devices.

Furthermore, the vSEPP 210 and the relay device 310 may function as a computer that performs the processing of the present invention. FIG. 12 is a diagram illustrating an example of a hardware configuration of the vSEPP 210 and the relay device 310. As shown in FIG. 12, the device can be configured as a computer device including a processor 1001, a memory 1002, a storage 1003, a communication device 1004, an input device 1005, an output device 1006, a bus 1007, and the like.

Each functional block of the device (see FIGS. 3 and 4) can be realized by any of hardware element of the computer device or a desired combination of the hardware elements.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the embodiments of the present disclosure.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Notification of information is not limited to that explained in the above aspects/embodiments, and may be performed by using a different method. For example, the notification of information may be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination of these. The RRC signaling may be called RRC message, for example, or can be RRC Connection Setup message, RRC Connection Reconfiguration message, or the like.

The input / output information can be stored in a specific location (for example, a memory) or can be managed in a management table. The information to be input / output can be overwritten, updated, or added. The information can be deleted after outputting. The inputted information can be transmitted to another device.

As long as there is no inconsistency, the order of sequences, flowcharts, and the like of the above aspects/embodiments in the present disclosure may be exchanged.

In the embodiments described above, the specific operation performed by the vSEPP 210 and the relay device 310 can be performed by another network node (device). Further, the functions of the vSEPP 210 and the relay device 310 can be realized by combining a plurality of other network nodes.

It should be noted that the terms described in this disclosure and terms necessary for understanding the present disclosure may be replaced by terms having the same or similar meanings. For example, at least one of a channel and a symbol may be a signal (signaling), if that is stated. Also, a signal may be a message. Further, the terms "system" and "network" can be used interchangeably.

Furthermore, the parameter and the like can be represented by an absolute value, can be expressed as a relative value from a predetermined value, or can be represented by corresponding other information. For example, the radio resource can be indicated by an index.

The gNB (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (RRH: Remote Radio Head)).

The term "cell" or "sector" refers to a part or all of the coverage area of a base station and/or a base station subsystem that performs communication service in this coverage. Furthermore, the terms "base station" "eNB", "cell", and "sector" can be used interchangeably. The base station can be called as a fixed station, NodeB, eNodeB (eNB), gNodeB (gNB), access point (access point), femtocell, small cell, and the like.

The UE 50 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used in the present disclosure, the phrase "based on" does not mean "based only on" unless explicitly stated otherwise. In other words, the phrase "based on" means both "based only on" and "based at least on".

In the present disclosure, the used terms "including", "comprising", and variants thereof are intended to be inclusive in a manner similar to the term "having". Furthermore, the term "or" used in the present disclosure or claims is intended not to be an exclusive disjunction.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

Throughout this disclosure, for example, during translation, if articles such as a, an, and the in English are added, these articles shall include plurality, unless it is clearly indicated that it is not so according to the context.

As described above, the details of the present invention have been disclosed by using the embodiments of the present invention. However, the description and drawings which constitute part of this disclosure should not be interpreted so as to limit the present invention. From this disclosure, various alternative embodiments, examples, and operation techniques will be apparent to a person skilled in the art.

### EXPLANATION OF REFERENCE NUMERALS

- 10: Radio communication system
- 20: VPLMN
- 30: HPLMN
- 50: UE
- 110: NF
- 120: NF
- 210: vSEPP
- 211: Encapsulation unit
- 213: Signature unit
- 215: Message transmitting unit
- 220: hSEPP
- 310: Relay device
- 311: Message receiving unit
- 313: Modifying unit
- 315: Signature unit
- 317: Message relaying unit
- 320: Relay device
- 1001: Processor
- 1002: Memory
- 1003: Storage
- 1004: Communication device
- 1005: Input device
- 1006: Output device
- 1007: Bus

## Claims

1. A radio communication system (10) comprising:
a security proxy device (210) connectable to a mobile communication network; and
a relay device (310) connectable to the security proxy device, wherein
the security proxy device includes
an encapsulation unit (211) that encapsulates a predetermined element included in an original message received via the mobile communication network;
a first signature unit (213) that adds a first signature to a first message that is obtained by encapsulation of the predetermined element by the encapsulation unit; and
a message transmitting unit (215) that transmits the first message to the relay device, and
the relay device includes
a message receiving unit (311) that receives the first message;
a modifying unit (313) that decapsulates the predetermined element included in the first message and executes a modification to the predetermined element;
a second signature unit (315) that adds a second signature to a second message including the predetermined element modified by the modifying unit; and
a message relaying unit (317) that relays the second message to another mobile communication network, wherein
the predetermined element includes a body and a header of the original message.

2. The radio communication system according to claim 1, wherein the modifying unit performs the modification to the predetermined element based on a predetermined data format.

3. The radio communication system according to claim 1, wherein the second signature unit adds the second signature to a modification history of the predetermined element by the modifying unit.

4. The radio communication system according to claim 3, wherein the message relaying unit relays the second message including the first signature, the second signature, and the modification history.

## Patentansprüche

1. Funkkommunikationssystem, (10) umfassend:
eine Sicherheits-Proxyvorrichtung (210), die mit einem mobilen Kommunikationsnetzwerk verbunden werden kann; und
eine Relaisvorrichtung (310), die mit der Sicherheits-Proxyvorrichtung verbunden werden kann, wobei
die Sicherheits-Proxyvorrichtung Folgendes einschließt
eine Verkapselungseinheit (211), die ein vorbestimmtes Element verkapselt, das in einer über das mobile Kommunikationsnetzwerk empfangenen Originalnachricht enthalten ist;
eine erste Signatureinheit (213), die eine erste Signatur zu einer ersten Nachricht hinzufügt, die durch Verkapselung des vorbestimmten Elements durch die Verkapselungseinheit erhalten wird; und
eine Nachrichtenübertragungseinheit (215), die die erste Nachricht an die Relaisvorrichtung überträgt, und
die Relaisvorrichtung Folgendes einschließt
eine Nachrichtenempfangseinheit (311), die die erste Nachricht empfängt;
eine Modifikationseinheit (313), die das in der ersten Nachricht enthaltene vorbestimmte Element entkapselt und eine Modifikation am vorbestimmten Element ausführt;
eine zweite Signatureinheit (315), die eine zweite Signatur zu einer zweiten Nachricht hinzufügt, die das durch die Modifikationseinheit modifizierte vorbestimmte Element einschließt; und
eine Nachrichtenrelaiseinheit (317), die die zweite Nachricht an ein anderes mobiles Kommunikationsnetzwerk weiterleitet, wobei
das vorbestimmte Element einen Körper und Header der Originalnachricht einschließt.

2. Funkkommunikationssystem nach Anspruch 1, wobei die Modifikationseinheit die Modifikation am vorbestimmten Element basierend auf einem vorbestimmten Datenformat durchführt.

3. Funkkommunikationssystem nach Anspruch 1, wobei die zweite Signatureinheit die zweite Signatur zu einem Modifikationsverlauf des vorbestimmten Elements durch die Modifikationseinheit hinzufügt.

4. Funkkommunikationssystem nach Anspruch 3, wobei die Nachrichtenrelaiseinheit die zweite Nachricht weiterleitet, die die erste Signatur, die zweite Signatur und den Modifikationsverlauf einschließt.

## Revendications

1. Système de communication radio (10) comprenant :
un dispositif mandataire de sécurité (210) pouvant être connecté à un réseau de communication mobile ; et
un dispositif de relais (310) pouvant être connecté au dispositif mandataire de sécurité, dans lequel
le dispositif mandataire de sécurité inclut
une unité d'encapsulation (211) qui encapsule un élément prédéterminé inclus dans un message d'origine reçu via le réseau de communication mobile ;
une première unité de signature (213) qui ajoute une première signature à un premier message qui est obtenu par encapsulation de l'élément prédéterminé par l'unité d'encapsulation ; et
une unité de transmission de message (215) qui transmet le premier message au dispositif de relais, et
le dispositif de relais inclut
une unité de réception de message (311) qui reçoit le premier message ;
une unité de modification (313) qui désencapsule l'élément prédéterminé inclus dans le premier message et effectue une modification sur l'élément prédéterminé ;
une deuxième unité de signature (315) qui ajoute une deuxième signature à un deuxième message incluant l'élément prédéterminé modifié par l'unité de modification ; et
une unité de relais de message (317) qui relaie le deuxième message à un autre réseau de communication mobile, dans lequel
l'élément prédéterminé inclut un corps et un en-tête du message d'origine.

2. Système de communication radio selon la revendication 1, dans lequel l'unité de modification effectue la modification sur l'élément prédéterminé sur la base d'un format de données prédéterminé.

3. Système de communication radio selon la revendication 1, dans lequel la deuxième unité de signature ajoute la deuxième signature à un historique de modification de l'élément prédéterminé par l'unité de modification.

4. Système de communication radio selon la revendication 3, dans lequel l'unité de relais de message relaye le deuxième message incluant la première signature, la deuxième signature et l'historique de modification.
